# FASCICULE DE BREVET EUROPEEN

(11) **EP 0 506 507 B1**
(45) Date de publication et mention de la délivrance du brevet: **24.05.1995**
(21) Numéro de dépôt: 92400663.8
(22) Date de dépôt: 13.03.1992
(51) Int. Cl.: C03C 17/36, G02B 1/10

(54) **Vitrage à couches avec une forte réflexion des rayonnements thermiques**
Beschichtete Verglasung mit einer hohen Reflektion von thermischer Strahlung
Coated glazing with a high reflection of thermal radiation

(30) Priorité: 23.03.1991 DE 4109708
(43) Date de publication de la demande: 30.09.1992
(73) Titulaire: SAINT GOBAIN VITRAGE INTERNATIONAL, 92400 Courbevoie (FR); VEGLA VEREINIGTE GLASWERKE, D-52066 Aachen (DE)
(72) Inventeur: Baum, Hans, Dr., W-5000 Köln 90 (DE)
(74) Mandataire: Breton, Jean-Claude

(56) Documents cités:
- EP-A- 0 233 003
- EP-A- 0 303 109
- FR-A- 2 586 245
- FR-A- 2 641 272
- US-A- 4 902 081

## Description

Le domaine de l'invention est celui des vitrages à couches sous vide et plus particulièrement ceux à base d'argent obtenus par la technique de pulvérisation cathodique.

L'invention concerne un vitrage, en particulier une plaque de verre flottée, équipé de couches multiples qui peut avoir des transmissions différentes dans le domaine visible mais qui a toujours une forte réflexion des rayonnements thermiques et dont les couches minces sont constituées d'au moins un séquence faite d'au moins cinq couches minces successives, à savoir une première couche à base d'oxyde métallique ou semi-conducteur, une couche métallique déposée sur la première couche, une couche d'argent, une couche métallique sur la couche d'argent et une couche supérieure comprenant un oxyde métallique ou semi-conducteur déposé sur cette couche métallique.

L'expression : vitrage ayant des transmissions différentes dans le domaine visible signifie des vitrages avec des transmissions lumineuses comprises entre 10 et 80 %.

Des plaques de verre sur lesquelles sont déposées les couches minces du type précédent sont en général produites sur des installations de pulvérisation cathodique continues. La technique de pulvérisation cathodique à confinement magnétique du plasma est aujourd'hui le procédé le plus économique. Si l'on veut déposer des couches oxydées, on utilise en général la pulvérisation cathodique réactive en se servant de cibles métalliques. Cela signifie qu'une faible quantité d'oxygène est ajoutée au gaz résiduel de l'enceinte constitué essentiellement d'argon et que cet oxygène transforme les atomes du métal extraits de la cible en oxyde.

Des vitrages du type général évoqué plus haut sont décrits par exemple dans la demande de brevet européen EP 0 229 921 A. Dans ce cas la première couche incorpore un oxyde du groupe comprenant les oxydes d'étain, de silicium, d'aluminium, de tantale et de zirconium ou bien leurs mélanges ; la couche métallique déposée sur la première couche comprend un métal du groupe comprenant le tantale, le tungstène, le nickel et le fer ou leurs alliages comprenant au moins 5O % en poids de l'un de ces métaux. La quatrième couche déposée sur l'argent comprend un métal du groupe des métaux constituant la deuxième couche et la couche superficielle comprend un oxyde du groupe formant la première couche.

La demande de brevet EP 0 224 704 A décrit également une plaque de verre revêtue de couches du type précédent dans lequel une couche de nickel est déposée au-dessus et au-dessous de la couche d'argent. Il est également possible de remplacer le nickel du dépôt métallique par les métaux titane, vanadium, chrome, manganèse, fer et cobalt ou les alliages de ses métaux.

La demande de brevet EP 0 233 003 A décrit également des vitrages du type précédent équipés d'une couche quintuple dans laquelle des couches métalliques de protection comprenant l'aluminium, le titane, le zinc, le tantale ou le zirconium sont déposées au-dessus et au-dessous de la couche d'argent.

Des plaques de verre du type mentionné plus haut et possédant des couches quintuples sont également décrites dans les demandes de brevet européen EP 0 303 109 A, EP 0 308 578 A et le brevet EP 0 035 906 B1. Tandis que dans le premier cas les deux couches métalliques sur et sous la couche d'argent comprennent chacune un alliage fait de 80 % en poids de nickel, et de 2O % de chrome, dans le second cas elles comprennent un métal du groupe comportant le tantale, le tungstène, le nickel et le fer ou leurs alliages faits d'au moins 50 % en poids de l'un de ses métaux. Dans la dernière de ces publications, les deux couches placées en-dessus et en-dessous de la couche d'argent comprennent chacune du titane, du zirconium, de l'indium, du silicium, du carbone, du cobalt ou du nickel.

Dans la plupart des cas décrits la couche métallique en-dessous de la couche d'argent et celle située au-dessus ont pour mission de protéger le dépôt d'argent pendant le traitement thermique de la plaque de verre en particulier lors du chauffage à des températures de 600 à 680°C dans le but de procéder au bombage ou à la trempe de la plaque tout en évitant la diffusion d'oxygène dans la couche d'argent. Cependant, dans le brevet EP 0 035 906 on propose de déposer une couche de titane, zirconium, silicium, indium, carbone, cobalt ou nickel au-dessus et en-dessous dans le but d'améliorer la stabilité de l'argent vis à vis de l'environnement. Cependant la plupart de ces éléments sont difficiles à déposer dans une installation de pulvérisation cathodique moderne à hautes performances.

De plus, la demande de brevet DE 36 28 057 A décrit le moyen de protéger une couche de métal noble intégrée dans une couche multiple où le métal noble réfléchit le rayonnement thermique: il s'agit d'une couche métallique, entre autres d'étain, déposée sur le métal noble pour le protéger quand un oxyde métallique doit être déposé au-dessus par pulvérisation cathodique.

L'invention a pour objet un vitrage équipé de couches multiples avec une forte réflexion pour le rayonnement thermique et dont l'ensemble de couches est constitué d'au moins une séquence d'au moins cinq couches successives, à savoir : une première couche comprenant un oxyde métallique ou semi-conducteur, une couche métallique déposée sur la première couche, une couche d'argent, une couche protectrice métallique déposée sur la couche d'argent et une couche supérieure comprenant un oxyde métallique ou semi-conducteur. Il faut que le vitrage selon l'invention n'ait pas de comportement à la corrosion moins bon que les vitrages antérieurs et qu'il résiste à un traitement thermique de bombage et/ou de trempe sans que la couche d'argent soit dégradée et il faut par ailleurs que la couche métallique protectrice sous la couche d'argent comprenne un métal bon marché et qui puisse être déposé sans difficulté dans les installations traditionnelles sous vide en particulier celles utilisant la pulvérisation cathodique à champ magnétique.

L'invention réside dans le fait que la couche métallique placée entre la première couche d'oxyde et la couche d'argent est en étain et a une épaisseur comprise entre 0,5 et 2 nm. Dans une variante, la couche métallique déposée sur l'argent est également de l'étain ou du nickel-chrome. De préférence l'étain ne comporte pas d'oxygène lié ou libre au moins dans les zone adjacentes à la couche d'argent.

L'invention concerne également les multicouches du type précédent où la première couche et la couche supérieure sont un oxyde du groupe comprenant l'oxyde d'étain, le dioxyde de silicium, l'oxyde d'aluminium, l'oxyde de tantale et l'oxyde de zirconium ou leurs mélanges.

En comparaison avec les métaux connus dans le but de constituer une protection en sous-couche, l'étain est un métal relativement bon marché qui peut être déposé sans difficulté sur des substrats vitreux dans une installation de pulvérisation cathodique à hautes performances.

La nouvelle couche d'étain sous la couche d'argent a une épaisseur très faible puisque comprise entre 0,5 et 2 nm ; tandis que la couche métallique protectrice au-dessus de la couche d'argent doit avoir, elle, une épaisseur nettement plus importante si l'on veut éviter la destruction de l'argent par l'oxygène à haute température. On a trouvé que l'effet désiré, à savoir à la fois un bon comportement contre la corrosion à long terme et la tenue de l'argent à haute température est obtenu complètement même dans le cas où la couche d'étain sous l'argent n'a qu'une épaisseur inférieur à 1 nm.

L'utilisation d'étain comme couche protectrice métallique sous l'argent est particulièrement utile et efficace dans le cas où la première couche déposée sur le verre comprend de l'oxyde d'étain. Dans ce cas, des cibles métalliques identiques en étain sont utilisées dans chacune des deux chambres de pulvérisation placées l'une après l'autre dans une installation industrielle continue et il suffit d'utiliser des conditions de dépôt différentes dans les deux cas, c'est-à-dire de faire une pulvérisation réactive dans la première chambre et une pulvérisation sans oxygène dans la seconde.

La couche protectrice métallique sous la couche d'argent a comme on a vu une importance essentielle dans la tenue chimique à long terme du dépôt. On a prouvé en pratique que la présence de cette couche métallique protectrice inférieure est d'autant plus importante que les plaques de verre traversant l'installation de dépôt le font à une vitesse plus grande.

On a développé un test pour l'évaluation de la résistance chimique du dépôt. Ce test consiste en une exposition de courte durée à l'acide chlorhydrique. Il donne des résultats représentatifs de la résistance du dépôt et permet de tirer des conclusions claires même en ce qui concerne la corrosion de longue durée et la stabilité thermique des dépôts multiples. Dans ce test un échantillon revêtu des couches est plongé dans une solution d'acide chlorhydrique centinormale (1/1OO N HCl) à une température de 38,5°C pour 8 minutes. On mesure la réflexion infrarouge des couches à une longueur d'onde de 8 microns avant et après immersion. La différence observée dans la réflexion infrarouge constitue une mesure de la dégradation de l'argent. On pourra conclure que les dépôts sont très résistants et capables de survivre à une corrosion de très longue durée si la différence des réflexions avant et après immersion est inférieure à 5 %. Des réalisations de plaques de verre revêtues selon l'invention sont illustrées par les exemples qui suivent :

### Exemple 1

Dans le but de produire un vitrage de protection thermique, une plaque de verre flottée de 4 mm d'épaisseur est équipée avec la structure de couche suivante obtenue dans une installation de pulvérisation cathodique continue avec cinq positions de cathodes successives :
première couche : 4O nm SnO₂
couche protectrice inférieure : 0,7 nm Sn
couche d'argent : 9 nm Ag
couche protectrice supérieure : 3 nm NiCr 80/2O
couche supérieure : 4O nm SnO₂
La plaque de verre flottée revêtue de cette manière a une transmission de 84,5 % à une longueur d'onde de 550 nm et une réflexion infra-rouge du côté couche de 89,0 % à 8 »m. Après le test consistant en une courte immersion dans l'acide chlorydrique, la réflexion infra-rouge à 8 »m est encore de 88,0 %. La différence de 1 % entre les valeurs de réflexion prouve la forte résistance chimique et donc la bonne tenue à la corrosion prévisible sur la longue durée.

A titre de comparaison on a équipé une plaque de verre flottée de 4 mm avec une couche quadruple c'est-à-dire avec la même combinaison de couches que précédemment à l'exclusion de la couche protectrice métallique inférieure. La transmission d'un tel échantillon à la longueur d'onde de 550 nm est de 85 % et la réflexion infra-rouge à 8 »m est également de 89 %. Après le traitement à l'acide chlorydrique la réflexion infra-rouge est descendue à 4O % ce qui correspond à une variation de 49 %. Ce test montre que la couche d'argent est fortement attaquée.

Comparé avec une structure à cinq couches dans laquelle la couche protectrice métallique inférieure comporte un dépôt de NiCr de 0,8 nm d'épaisseur faite de 8O % de nickel et 2O % de chrome, il apparaît que le comportement à la corrosion de la plaque de verre revêtue conformément à l'invention est au moins aussi bon.

### Exemple 2

Dans le but de produire une plaque de verre de protection thermique trempable on a déposé sur une plaque de verre float de 6 mm la structure de couche suivante :
première couche : 4O nm SnO₂
couche protectrice inférieure : 0,7 nm Sn
couche d'argent : 9 nm Ag
couche protectrice supérieure : 7,5 nm NiCr 80/2O
couche supérieure : 40 nm SnO₂
La plaque de verre revêtue possède une transmission de 67 % à 55O nm et une réflexion infra-rouge de 90 % à 8 »m. La plaque est chauffée dans l'atmosphère ambiante jusqu'à une température de 650°C puis trempée par refroidissement à l'air. A la fin du traitement la couche métallique protectrice supérieure s'est partiellement transformée en oxyde. Il en résulte un accroissement de la transmission à 550 nm jusqu'à 83 %. En revanche la réflexion infra-rouge après trempe est inchangée à 90 % ce qui montre que la couche d'argent n'a pas été attaquée.

### Exemple 3

Un vitrage de protection solaire avec une transmission réduite dans la région visible du spectre et avec une réflexion infra-rouge forte est obtenue en déposant sur une plaque de verre flottée de 6 mm les couches suivantes :
première couche : 4O nm SnO₂
couche protectrice inférieure : 0,7 nm Sn
couche d'argent : 18 nm Ag
couche protectrice supérieure : 3 nm NiCr 80/2O
couche supérieure : 58 nm SnO₂
La plaque de verre revêtue a une transmission de 58 % à 550 nm et une réflexion IR à 8 »m de 97 %. Après le test à l'acide chlorhydrique, celle-ci est toujours inchangée à 97 %.

Une plaque de verre faite avec un dépôt quadruple c'est-à-dire identique au dépôt précédent à l'exclusion de la couche métallique inférieure en étain montre dans les mêmes conditions une réflexion infra-rouge qui a diminué de 5O %.

### Exemple 4

Un vitrage trempable de protection thermique et solaire qui possède donc une transmission visible réduite et une forte réflexion infra-rouge est produit par le dépôt sur une plaque de verre float de 6 mm de la structure de couches suivante :
première couche : 4O nm SnO₂
couche protectrice inférieure : 0,7 nm Sn
couche d'argent : 18 nm Ag
couche protectrice supérieure : 7,5 nm NiCr 80/2O
couche supérieure : 58 nm SnO₂
La plaque revêtue a une transmission de 43 % à 55O nm et une réflexion à 8 »m de 97 %. On chauffe la plaque à l'atmosphère ambiante jusqu'à 650°C et on la trempe à l'air. Après trempe la transmission est de 58 % et la réflexion IR, inchangée de 97 %.

### Exemple 5

Une plaque de 4 mm de verre float est équipée de la même structure de couche que dans l'exemple 1 mais on a ajouté une couche supplémentaire protectrice de SiO₂ obtenue par pulvérisation cathodique d'une épaisseur de 25 nm. La transmission du verre a 55O nm est de 84,0 % et la réflexion IR à 8 »m de 89,0 %. Après la courte exposition à l'acide chlorhydrique la réflexion à 8 »m de 88,0 %. La fonction de la couche supplémentaire en SiO₂ est d'accroître la résistance des couches inférieures à la rayure ce qui procure au vitrage en plus de sa bonne résistance chimique une excellente résistante mécanique et permet donc de le stocker pendant une longue durée dans d'excellentes conditions.

Les exemples 1 à 5 qui viennent d'être décrits présentent des couches quintuples à base d'argent déposées sur le verre mais l'effet protecteur de la couche d'étain placée sous la couche d'argent est le même lorsque plusieurs ensemble de couches identiques sont superposées comme par exemple dans la demande de brevet WO 9008334. Cette demande a en effet pour objet un vitrage muni d'un empilement de couches à réflexion infra-rouge pour le contrôle solaire. Cet empilement est du type des filtres interférentiels de Fabry-Perot et comprend au moins deux couches métalliques comme l'argent séparées et entourées par des couches de diélectrique.

## Revendications

1. Vitrage équipé de couches multiples avec une forte réflexion pour le rayonnement thermique dont le revêtement est constitué d'au moins une séquence d'au moins cinq couches successives à savoir une première couche à base d'oxyde métallique ou semi-conducteur, une couche métallique déposée sur la première couche, une couche d'argent, une couche protectrice métallique sur la couche d'argent et une couche supérieure comprenant un oxyde métallique ou semi-conducteur déposé sur cette couche protectrice métallique, **caractérisé en ce que** la couche métallique déposée sur la première couche est en étain et a une épaisseur comprise entre 0,5 et 2 nm.

2. Vitrage conforme à la revendication 1, **caractérisé en ce que** la couche protectrice métallique déposée sur l'argent est également en étain ou en nickel-chrome.

3. Vitrage selon la revendication 2, **caractérisé en ce que** les couches d'étain ne comportent pas d'oxygène lié ou libre au moins dans les zones adjacentes à la couche d'argent.

4. Vitrage selon l'une des revendications 1 à 3, **caractérisé en ce que** la première couche est un oxyde du groupe comprenant l'oxyde d'étain, le dioxyde de silicium, l'oxyde d'aluminium, l'oxyde de tantale et l'oxyde de zirconium ou des mélanges de ces oxydes.

5. Vitrage selon l'une des revendications 1 à 4, **caractérisé en ce que** l'oxyde métallique déposé sur la couche protectrice métallique supérieure est un oxyde du groupe comprenant l'oxyde d'étain, le dioxyde de silicium, l'oxyde d'aluminium, l'oxyde de tantale et l'oxyde de zirconium ou des mélanges de ces oxydes.

6. Vitrage selon l'une des revendications 1 à 5, **caractérisé par** la structure de couches suivante commençant à partir du verre : SnO₂-Sn-Ag-NiCr-SnO₂.

7. Vitrage selon l'une des revendications 1 à 6, **caractérisé par** la structure de couches suivante commençant à partir du verre : SnO₂-Sn-Ag-Sn-SnO₂.

8. Vitrage selon l'une des revendications 1 à 7, **caractérisé en ce qu'** une couche additionnelle en un matériau résistant à la rayure est déposée sur la couche supérieure d'oxyde.

9. Vitrage selon la revendication 8, **caractérisé en ce que** la couche additionnelle est en SiO₂.

## Claims

1. Pane provided with multiple films having a high reflection for thermal radiation, the covering of which is composed of at least one sequence of at least five successive films, that is to say a first film based upon metallic or semi conductor oxide film, a metallic film deposited on the first film, a silver film, a protective metallic film over the silver film and an upper film comprising a metallic or semiconductor oxide film deposited on this protective metallic film, characterized in that the metallic film deposited on the first film is of tin and has a thickness of between 0.5 and 2 nm.

2. Pane according to Claim 1, characterized in that the protective metallic film deposited on the silver is also of tin or of nickel-chromium.

3. Pane according to Claim 2, characterized in that the tin films do not contain combined or free oxygen at least in the zones adjacent to the silver film.

4. Pane according to one of Claims 1 to 3, characterized in that the first film is an oxide of the group comprising tin oxide, silicon dioxide, aluminium oxide, tantalum oxide and zirconium oxide, or mixtures of these oxides.

5. Pane according to one of Claims 1 to 4, characterized in that the metallic oxide deposited on the upper protective metallic film is an oxide of the group comprising tin oxide, silicon dioxide, aluminium oxide, tantalum oxide and zirconium oxide or mixtures of these oxides.

6. Pane according to one of Claims 1 to 5, characterized by the following film structure commencing from the glass: SnO₂-Sn-Ag-NiCr-SnO₂.

7. Pane according to one of Claims 1 to 5, characterized by the following film structure commencing from the glass: SnO₂-Sn-Ag-Sn-SnO₂.

8. Pane according to one of Claims 1 to 7, characterized in that an additional film of a material resistant to scratching is deposited over the upper oxide film.

9. Pane according to Claim 8, characterized in that the additional film is of SiO₂.

## Patentansprüche

1. Mit Mehrfachschichten versehene Glasscheibe mit hoher Reflexion für Wärmestrahlung, deren Schichtaufbau aus wenigstens einer Folge von wenigstens fünf aufeinanderfolgenden Schichten besteht, nämlich einer ersten Schicht auf der Basis eines Metall- oder Halbleiteroxids, einer auf der ersten Schicht angeordneten Metallschicht, einer Silberschicht, einer auf der Silberschicht angeordneten metallischen Schutzschicht und einer auf dieser metallischen Schutzschichtangeordneten, ein Metall- oder Halbleiteroxid umfassenden Deckschicht, **dadurch gekennzeichnet,** daß die auf der ersten Schicht angeordnete Metallschicht aus Zinn besteht und eine Dicke von 0,5 bis 2 nm aufweist.

2. Glasscheibe nach Anspruch 1, dadurch gekennzeichnet, daß die auf der Silberschicht angeordnete metallische Schutzschicht ebenfalls aus Zinn oder aber aus Nickel-Chrom besteht.

3. Glasscheibe nach Anspruch 2, dadurch gekennzeichnet, daß die Zinnschichten wenigstens in den an der Silberschicht angrenzenden Bereichen frei von gebundenem oder freiem Sauerstoff sind.

4. Glasscheibe nach einem der Ansprüche 1 bis 3, dadurch gekennzeichnet, daß die erste Schicht aus einem Oxid aus der Zinnoxid, Siliziumdioxid, Aluminiumoxid, Tantaloxid und Zirkoniumoxid oder Mischungen dieser Oxide umfassenden Gruppe besteht.

5. Glasscheibe nach einem der Ansprüche 1 bis 4, dadurch gekennzeichnet, daß das auf der oberen metallischen Schutzschicht angeordnete Metalloxid ein Oxid aus der Zinnoxid, Siliziumdioxid, Aluminiumoxid, Tantaloxid und Zirkoniumoxid oder Mischungen dieser Oxide umfassenden Gruppe besteht.

6. Glasscheibe nach einem der Ansprüche 1 bis 5, gekennzeichnet durch folgenden Schichtaufbau, beginnend beim Glas: SnO₂-Sn-Ag-NiCr-SnO₂.

7. Glasscheibe nach einem der Ansprüche 1 bis 5, gekennzeichnet durch folgenden Schichtaufbau beginnend beim Glas: Sn0₂-Sn-Ag-Sn-SnO₂.

8. Glasscheibe nach einem der Ansprüche 1 bis 7, dadurch gekennzeichnet, daß auf der oxidischen Deckschicht eine zusätzliche Schicht aus einem kratzfesten Material angeordnet ist.

9. Glasscheibe nach Anspruch 8, dadurch gekennzeichnet, daß die zusätzliche Schicht aus Si0₂ besteht.
